# EUROPÄISCHE PATENTSCHRIFT

(11) **EP 2 172 328 B1**
(45) Veröffentlichungstag und Bekanntmachung des Hinweises auf die Patenterteilung: **28.09.2011**
(21) Anmeldenummer: 08017352.9
(22) Anmeldetag: 02.10.2008
(51) Int. Cl.: B29C 65/36, F16L 47/03

(54) **Induktionsverbindungsmuffe zum Schmelzverbinden schweißbarer Thermoplastkörper**
Induction connection sleeve for welding together weldable thermoplastic bodies
Manchon de raccordement à induction destiné à la liaison par fusion de corps thermoplastiques pouvant être soudés

(43) Veröffentlichungstag der Anmeldung: 07.04.2010
(73) Patentinhaber: Leister Process Technologies, 6056 Kägiswil (CH)
(72) Erfinder: Gubler, Ulrich, 6006 Luzern (CH); Barmet, Pius, 6048 Horw (CH); Stauffer, Erich, 6003 Luzern (CH)
(74) Vertreter: Klocke, Peter

(56) Entgegenhaltungen:
- WO-A-97/37167
- DE-A1- 3 600 156
- DE-A1- 19 941 084
- DE-B- 1 291 109
- DE-C1- 3 226 575
- JP-A- 5 118 486

## Beschreibung

Die Erfindung betrifft eine Induktionsverbindungsmuffe zum Schmelzverbinden schweißbarer Thermoplastkörper, mit mindestens zwei Fassungen zur Aufnahme von Verbindungsabschnitten der zu verbindenden Thermoplastkörper und mit einem in die jeweiligen Fassungen eingebetteten Induktionsheizelement, das in wesentlichen Abschnitten vollständig mit einem schweißbaren Thermoplastmaterial der jeweiligen Fassung umgeben ist. Dabei ist das Induktionselement aus einem metallischen Werkstoff mit Federeigenschaften hergestellt, koaxial zu den Fassungen angeordnet und entgegen der Richtung des beim Schmelzverbinden benötigten Anpressdruckes vorgespannt.

Bekanntlich können Thermoplastkörper, beispielsweise Kunststoffrohre, die als biegesteife Gebilde ausgebildet sind, nach verschiedenen Methoden der Kunststoffschweißtechnik miteinander unlösbar verbunden werden. Üblicherweise wird dazu eine Kunststoffverbindungsmuffe aus einem schweißbaren thermoplastischen Material verwendet, in die als an den Rohrenden angeordnete Verbindungsabschnitte der Thermoplastkörper eingeschoben und durch lokale Erwärmung unter Druck miteinander dichtend verbunden werden. Die Erwärmung führt zu einem gegenseitigen Anschmelzen und Verschmelzen der Thermoplastkörper und der Kunststoffverbindungsmuffe. Dazu bestehen bereits verschiedene herkömmliche Vorrichtungen und Verfahren, bei denen beispielsweise Warmschmelz-, Elektroschmelz- oder Induktionsschmelztechniken verwendet werden.

Bei einem bekannten Induktionsschmelzverfahren zum Verbinden eines Kunststoffrohres und eines Kunststofffittings ist ein Induktionsheizelement in den thermoplastischen Fitting eingeformt. Der Stromfluss durch das Heizelement wird von einer Primärinduktionsspule induziert, die um den das Induktionsheizelement enthaltenen Bereich des Fittings angeordnet wird. Die Temperatur des Induktionsheizelements wird soweit erhöht, dass das Material des Kunststofffittings und des Kunststoffrohres weich wird und aufschmilzt, was eine Schmelzverbindung zwischen dem Kunststofffitting und dem Kunststoffrohr zur Folge hat. Kunststofffttings mit eingebettetem Induktionsheizelement werden im folgenden als Induktionsverbindungsmuffe bezeichnet.

Grundsätzlich gibt es zwei Typen von Induktionsverbindungsmuffen, zum einen mit einer induktionsfähigen Metalleinlage und zum anderen aus einem induktionsfähigen Kunststoffmaterial. Induktionsverbindungsmuffen mit einer Metalleinlage bzw. mit eingebetteten ferromagnetischen Kunststoffpartikeln als Induktionsheizelement sind aus dem Stand der Technik in einer Vielzahl von Ausführungsformen bekannt. Bevorzugt werden im allgemeinen Induktionsverbindungsmuffen mit einer Metalleinlage, die hauptsächlich durch Wirbelströme erwärmt werden. Für den Betrieb der Primärinduktionsspule reichen dabei Wechselströme im Kilohertz-Bereich aus, was das Design des Anregungsgerätes wesentlich vereinfacht. Die Anregungsgeräte für eine Induktionsverbindungsmuffe mit einer ferromagnetischen Kunstoffmatrix sind dem gegenüber weit aufwändiger. Weil die ferromagnetischen Partikel in der Kunststoffmatrix klein sind, können sie nicht von induzierten Wirbelströmen erwärmt werden, sondern nur durch die magnetische Umpolung der ferromagnetischen Partikel. Dies erfordert wesentlich höhere Frequenzen, die im Megahertz-Bereich liegen und die Anregungsgeräte verteuern.

Beispiele für das Induktionsschmelzverfahren und für Induktionsschmelzvorrichtungen sind in der EP 0 480 053 B1 und der EP 0 909 367 B1 beschrieben. Die dort vorgeschlagenen Induktionsverbindungsmuffen weisen in der Fassung ein gerades ringförmiges zylindrisches Bauteil aus Metall als Induktionsheizelement auf. Dabei kann das Induktionsheizelement vollflächig oder gitterartig ausgebildet sein. Für eine sichere Schweißverbindung zwischen den Verbindungsabschnitten der zu verbindenden Thermoplastkörper und der Induktionsverbindungsmuffe ist es erforderlich, dass die miteinander zu verschweißenden Flächen nach der Ausbildung einer plastischen Schmelzverbindungszone, die sich beim Erkalten verfestigt, beim Erstarren einen bestimmten Anpressdruck zueinander aufweisen. Eine ausreichende Druckeinwirkung auf die Schmelzverbindungszone garantiert eine dauerhaft flüssigkeits- und gasdichte Verbindung an der Schweißstelle.

Übliche Kunststoffrohre werden im Strangpressverfahren mit großen Fertigungstoleranzen hergestellt, so dass der erforderliche Anpressdruck auch bei durch Umspritzen hochgenau hergestellten Induktionsverbindungsmuffen nicht sichergestellt ist. Damit ergibt sich beim Zusammenfügen der Kunststoffrohre mit der Induktionsverbindungsmuffe ein Ringspalt zwischen diesen, der beim Verschweißen zur sicheren Verbindung und Abdichtung in der Schmelzverbindungszone vollständig geschlossen werden muss. Dazu sind in der Regel spezielle Vorrichtungen notwendig, die von außen einen radialen Druck auf die Schmelzverbindungszone ausüben.

Auf eine solche spezielle Vorrichtung kann bei dem in der DE 12 91 109 B offenbarten Verfahren zum Verschweißen von Kunststoffrohren und bei der beschriebenen nach dem Verfahren ausgebildeten Schweißverbindung verzichtet werden. Dieser Stand der Technik offenbart ein Verfahren zum Verschweißen von Kunststoffrohren mit die Rohrenden übergreifenden Verbindungsstücken, wobei in den Verbindungsstücken in sich geschlossene, den Rohrenden zugeordnete metallische Einlagen angeordnet sind, in denen zur Erzeugung der Schweißtemperatur ein Induktionsstrom von geeigneter Frequenz induziert wird.

Dabei ist die metallische Einlage bündig mit der inneren Oberfläche des übergreifenden, als Muffe ausgeführten Verbindungsstückes in dessen Innenwand eingebettet. Die metallische Einlage ist von einem wellenlinienförmig gebogenen Draht oder einem entsprechenden Drahtgeflecht gebildet und unter radialer Vorspannung mit dem Muffenmaterial verbunden. Beim Herstellen der Schweißverbindung zieht sich die nach außen vorgespannte Einlage in dem plastifizierten Kunststoffmaterial radial nach innen zusammen und verankert sich in der ebenfalls plastifizierten gegenüberliegenden äußeren Oberfläche der Außenwand des Kunststoffrohres. Der Ringspalt zwischen den Kunststoffrohren und der Induktionsverbindungsmuffe wird durch die in sich ringförmige Einlage geschlossen, die nach dem Schweißvorgang in die Rohrenden und in die Muffe zugleich eingebettet ist.

Der Erfindung liegt die Aufgabe zugrunde, eine Möglichkeit vorzuschlagen, bei dem selbst bei ungenauen Passungen zwischen den zu verschweißenden Teilen eine flüssigkeitsdichte und ausreichend feste Schweißverbindung ohne von außen wirkende Spannungsvorrichtungen erzielt werden kann.

Diese Aufgabe wird erfindungsgemäß durch eine Induktionsverbindungsmuffe mit den Merkmalen des Anspruchs 1 oder 2 gelost. Weitere vorteilhafte Ausgestaltungen sind den Unteransprüchen zu entnehmen.

Die erfindungsgemäße Induktionsverbindungsmuffe weist ein Induktionsheizelement auf, das durch Umspritzen derart in die jeweilige Fassung eingebettet ist, dass thermoplastisches Kunststoffmaterial der Fassung bei in die Fassung der Induktionsverbindungsmuffe eingeführtem Thermoplastkörper zwischen dem Induktionsheizelement und dem Verbindungsabschnitt angeordnet ist und dass beim Schmelzverbinden der Induktionsverbindungsmuffe mit den Thermoplastkörpern das Induktionsheizelement das zwischen dem Induktionsheizelement und den Verbindungsabschnitten befindliche Kunststoffmaterial der Fassungen plastifiziert und das aufgeschmolzene Thermoplastmaterial durch Entspannen an die Thermoplastkörper presst. Das Induktionsheizelement, das aus einem metallischen Werkstoff mit Federeigenschaften hergestellt ist und unter Vorspannung in dem thermoplastischen Material der Fassungen einliegt, ist in seinen wesentlichen Abschnitten vollständig von dem schweißbaren Thermoplastmaterial der Fassungen umgeben. Unter wesentlichen Abschnitten werden dabei diejenigen Abschnitte des Induktionsheizelements verstanden, die radial nach außen vorgespannt sind. Beim Schmelzverbinden der Induktionsverbindungsmuffe mit den Thermoplastkörpern erfolgt ein Anpressen des den Thermoplastkörpern gegenüberliegenden aufgeschmolzenen Thermoplastmaterial der Fassungen an die Verbindungsabschnitte der Thermoplastkörper durch das Induktionsheizelement beim Entspannen der wesentlichen Abschnitte des Induktionsheizelementes. Das Induktionsheizelement wird von dem Thermoplastmaterial der Fassungen unter Vorspannung gehalten, solange das Thermoplastmaterial nicht plastifiziert ist. Beim Kunststoffschweißvorgang wird das Thermoplastmaterial der Fassung durch Erwärmung weich und damit plastisch verformbar, so dass sich das Induktionsheizelement entspannt.

Die Richtung der Vorspannung des Induktionsheizelementes ist entsprechend entgegen der gewünschten Richtung des benötigten Anpressdruckes gewählt, wodurch sich das Induktionsheizelement in Richtung der Schmelzverbindungszone entspannt. Durch den zu dem Verbindungsabschnitt des Thermoplastkörpers hin von dem Induktionsheizelement ausgeübten Druck wird das dem Thermoplastkörper gegenüberliegende aufgeschmolzene Thermoplastmaterial der Fassung an den Verbindungsabschnitt des Thermoplastkörpers angepresst und so der Ringspalt zwischen der Fassung und dem Verbindungsabschnitt sicher geschlossen.

Die Vorspannung des Induktionsheizelementes kann erzeugt werden, indem beim Umspritzen des Induktionsheizelementes dieser vorgespannt wird oder indem die ganze Muffe nach dem Umspritzen expandiert wird, wobei der Kunststoff bis knapp unterhalb der Schmelztemperatur temperiert wird.

Die Induktionsverbindungsmuffe kann beispielsweise als reine Verbindungsmuffe mit zwei gegenüberliegenden Fassungen oder als Abzweigmuffe mit drei oder mehr Fassungen ausgebildet sein, wobei die Fassungen auch eine unterschiedliche Form und/oder Größe aufweisen können. Die einzelnen Fassungen können dabei derart ausgeführt sein, dass sie die Verbindungsabschnitte der zu verbindenden Thermoplastkörper nur außen, nur innen oder innen und außen übergreifen. Die Richtung der Vorspannung des Induktionsheizelementes ist von der Art des Übergriffs abhängig.

Eine gute mechanische Ausrichtung des Verbindungsabschnittes zu der Fassung sowie eine gute mechanische Verbindung des Verbindungsabschnittes zu der Fassung ergibt sich, wenn die Fassung eine Wandung der Verbindungsabschnitte beidseitig übergreift und beidseitig mit diesen verschweißt wird. Bei einer derart ausgeführten Induktionsverbindungsmuffe ist das Induktionsheizelement vorteilhafterweise speziell so ausgebildet, dass es die Wandung ebenfalls beidseitig übergreift, wobei die Vorspannung auf den beiden Seiten entgegengesetzt zueinander ist.

Das Induktionsheizelement ring- oder hülsenförmig ausgebildet und zumindest bereichsweise radial vorgespannt. Dabei kann das Induktionsheizelement eine geschlossene oder eine durchbrochene Wandung aufweisen. Auch an den Enden axial geschlitzte Wandungsabschnitte sind möglich.

In einer Ausführungsform der Erfindung weißt das Induktionsheizelement einen zu einem Zylinder verformten Werkstoffstreifen auf, zwischen dessen zu einander weisenden Kanten ein axialer Längsspalt gebildet ist. Durch den Längsspalt lässt sich das Induktionsheizelement einfach radial vorspannen, indem der Längsspalt vergrößert oder verkleinert wird. Außerdem ist ein derartiges Induktionsheizelement besonders einfach und kostengünstig herzustellen.

In einer anderen Ausführungsform der Erfindung weist das Induktionsheizelement einen geschlossenen Zylinderabschnitt und einen daran anschließenden axial geschlitzten Zylinderabschnitt mit radial federnden Lamellen auf. Durch den geschlossenen Zylinderabschnitt wird eine hohe mechanische radiale Stabilität des Induktionsheizelements erreicht. Die radial federnden Lamellen des geschlitzten Zylinderabschnitts können radial nach innen oder außen vorgespannt werden. Es ist auch möglich, beidseits des geschlossenen Zylinderabschnitts einen entsprechenden axial geschlitzten Zylinderabschnitt vorzusehen.

In einer Ausführungsform der erfindungsgemäßen Induktionsverbindungsmuffe sind in die Fassung mindestens zwei Induktionselemente mit axialem Abstand zueinander angeordnet. Auf diese Weise kann die Fassung mit dem zugeordneten Verbindungsabschnitt an mehreren axial aufeinander folgenden Stellen verschweißt werden, was sich vorteilhaft auf die mechanische Befestigung des Thermoplastkörpers an der Verbindungsmuffe sowie auf die Abdichtung zwischen der Fassung und dem Verbindungsabschnitt auswirkt, wenn die Materialien auf grund unterschiedlicher Ausdehnungskoeffizienten beim Erkalten unterschiedlich reagieren.

Nachfolgend wird die Erfindung anhand dreier in der Zeichnung dargestellter Ausführungsbeispiele näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein.

Es zeigen:
- Figur 1: eine erste erfindungsgemäße Induktionsverbindungsmuffe mit einem ersten Induktionsheizelement in einer Längsschnittdar- stellung, vor dem Zusammenstecken mit zwei Rohrenden (Figur 1a), nach dem Zusammenstecken (Figur 1b) und nach dem Verschweißen (Figur 1c);
- Figur 2: eine zweite erfindungsgemäße Induktionsverbindungsmuffe mit einem zweiten Induktionsheizelement in einer Längsschnittdar- stellung, vor dem Zusammenstecken mit zwei Rohrenden (Figur 2a), nach dem Zusammenstecken (Figur 2b) und nach dem Verschweißen (Figur 2c);
- Figur 3: eine dritte erfindungsgemäße Induktionsverbindungsmuffe mit einem dritten Induktionsheizelement in einer Querschnitt- darstellung; und

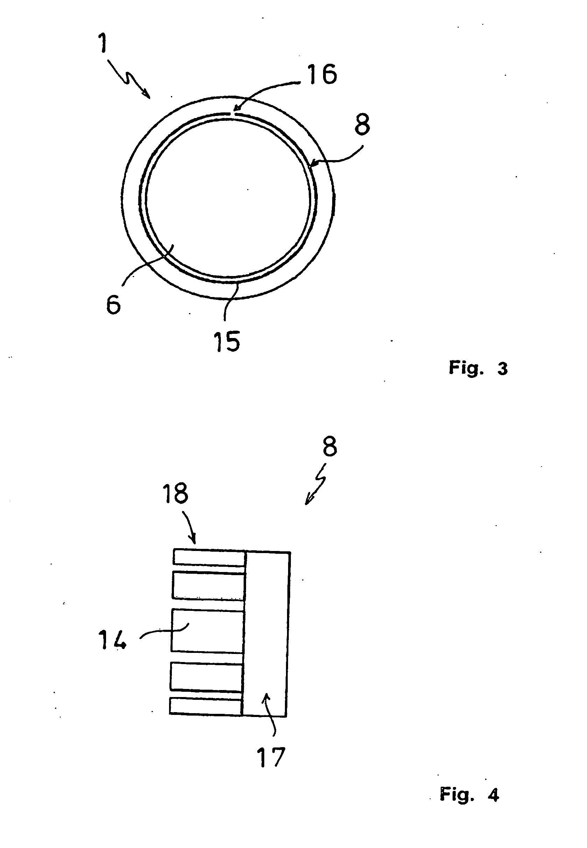

- Figur 3: ein alternatives Induktionsheizelement in einer Längsschnitt- darstellung.

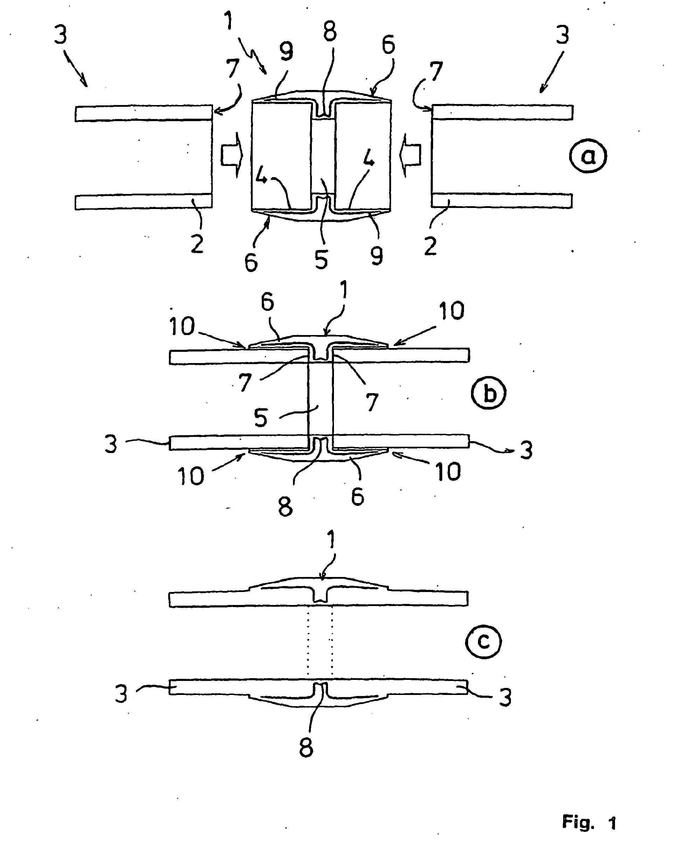

Die Figur 1 zeigt in der Figur 1a die erste erfindungsgemäße Induktionsverbindungsmuffe 1. In der Figur 1b sind in die Verbindungsmuffe 1 Verbindungsabschnitte 2 von zu verbindenden Thermoplastkörpern 3 in Form von Kunststoffrohren eingesteckt. In der Figur 1c sind die Kunststoffrohre 3 mit der Induktionsverbindungsmuffe 1 verschweißt. Die Induktionsverbindungsmuffe 1 weist eine im wesentlichen hohlzylindrische Form mit einem über eine Innenumfangsfläche 4 vorstehenden Rindbund 5 auf, die zwei Fassungen 6 zur Aufnahme der Verbindungsabschnitte 2 stirnseitig begrenzt. Der Ringbund 5 dient zum Stoßen von Stirnflächen 7 der Verbindungsabschnitte 2.

In das thermoplastische Kunststoffmaterial der Induktionsverbindungsmuffe 1 ist ein buchsenähnlich ausgebildetes Induktionsheizelement 8 aus einem metallischen Werkstoff mit Federeigenschaften eingebettet und koaxial zu den Fassungen 6 mittig zwischen den Fassungen 6 angeordnet. Endabschnitte 9 des Induktionsheizelements 8 sind geringfügig nach außen radial vorgespannt. Um dies zu ermöglichen, weisen zumindest die Endabschnitte 9 des Induktionsheizelementes 1 ein oder mehrere in der Zeichnung nicht sichtbare axiale Schlitze auf. Beim Schweißvorgang wird der in der Figur 1b sichtbare Ringspalt 10 zwischen den Verbindungsabschnitten 2 und der Fassung 6 beim Entspannen der Endabschnitte 9 des Induktionsheizelements 8 mit Material der Fassung 6 geschlossen, das von den rückfedernden Endabschnitten 9 an die Verbindungsabschnitte 2 außen angepresst wird. Die Figur 1c zeigt die hergestellte Schweißverbindung, bei der die Induktionsverbindungsmuffe 1 vollständig stoffschlüssig mit den Verbindungsabschnitten 2 der Thermoplastkörper 3 verbunden ist.

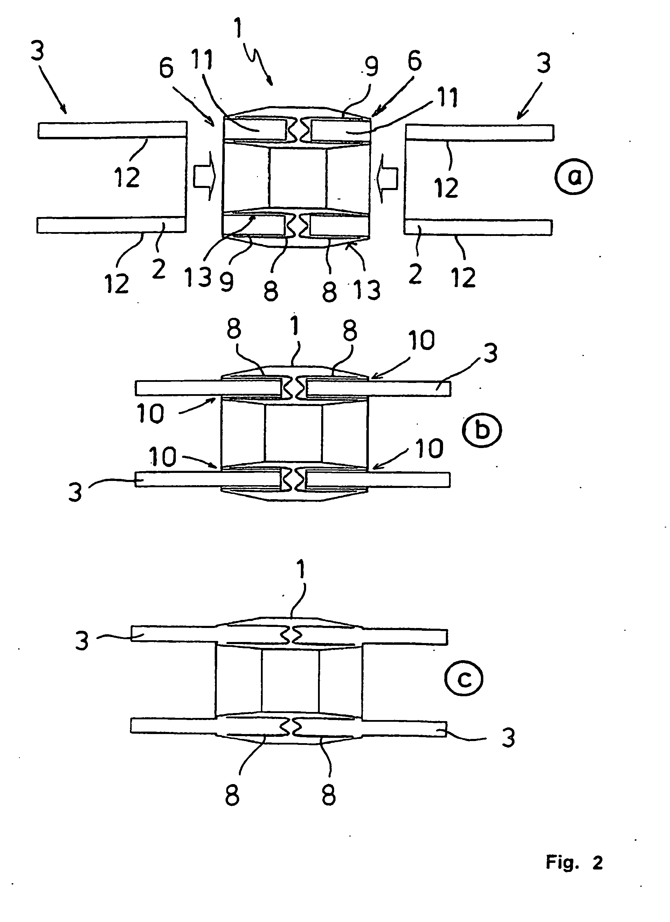

Die Figur 2 zeigt in der Figur 2a die zweite erfindungsgemäße Induktionsverbindungsmuffe 1. Die Figuren 2b und 2c zeigen die Induktionsverbindungsmuffe 1 mit eingesteckten und unverschweißten bzw. mit eingesteckten und verschweißten Verbindungsabschnitten 2 der ebenfalls als Kunststoffrohr ausgeführten Thermoplastkörper 3. Die Induktionsverbindungsmuffe 1 weist ebenfalls eine hohlzylindrische Form mit zwei Fassungen 6 auf, die jedoch als stirnseitige Ringnuten 11 ausgeführt sind. Die Ringnuten 11 können die Verbindungsabschnitte 2 der Kunststoffrohre 3 aufnehmen und an Umfangsflächen 12 klemmen. Die Ringnut 11 der Fassung 6 ist durch einen äußeren und einen inneren Ringbund 13 begrenzt.

Jede der Fassungen 6 weist ein metallisches radial elastisch verformbares Induktionsheizelement 8 auf, das sich koaxial zu der Ringnut 11 angeordnet, in dem äußeren und inneren Ringbund 13 mit Endabschnitten 9 erstreckt. Die Endabschnitte 9 des Induktionsheizelementes 8 sind ähnlich der in der Figur 1 beschriebenen Endabschnitte 9 ausgebildet, wobei der im äußeren Ringbund 13 einliegende Endabschnitt 9 radial nach außen und/oder der im inneren Ringbund 13 eingebettete Endabschnitt 9 radial nach innen vorgespannt ist. Beim Schweißen wird der in der Figur 2b dargestellte äußere und innere Ringspalt 10 beim Entspannen des Induktionsheizelements 8 mit Material des äußeren und des inneren Ringbundes 13 geschlossen.

Figur 3 zeigt die dritte Ausführungsform der erfindungsgemäßen Induktionsverbindungsmuffe 1. Das eingebettete Induktionsheizelement 8 ist als einfacher Anpressring ausgeführt. Der Anpressring 8 besteht aus einem zu einem Zylinder verformten Werkstoffstreifen 15, zwischen dessen zueinander weisenden Kanten ein axialer Längsspalt 16 ausgebildet ist. Der Anpressring 8 ist radial nach außen vorgespannt, so dass er beim Aufschmelzen des thermoplastischen Materials der Fassung 6 einen nach innen gerichteten Druck auf einen rohrförmigen Verbindungsabschnitt 2 eines in der Zeichnung nicht dargestellten Thermoplastkörpers 3 ausübt und damit ein vorhandener Ringspalt zwischen der Fassung 6 und dem Verbindungsabschnitt 2 geschlossen wird.

Figur 4 zeigt ein alternatives Induktionsheizelement 8. Das dargestellte Induktionsheizelement 8 weist einen geschlossenen Zylinderabschnitt 17 und einen daran anschließenden axialen Zylinderabschnitt 18 mit radial federnden Lamellen 14 auf. Dieses Induktionsheizelement 8 kann mit oder ohne leichte Modifikationen für die in den Figuren 1a und 2a dargestellten erfindungsgemäßen Induktionsverbindungsmuffen 1 verwendet werden.

## Patentansprüche

1. Induktionsverbindungsmuffe (1) zum Schmelzverbinden schweißbarer Thermoplastkörper (3), mit mindestens zwei Fassungen (6) zur Aufnahme von Verbindungsabschnitten (2) der zu verbindenden Thermoplastkörper (3) und mit einem in die Fassungen (6) eingebetteten Induktionsheizelement (8), das in wesentlichen Abschnitten vollständig mit einem schweißbaren Thermoplastmaterial umgeben ist, wobei das Induktionsheizelement (8) koaxial zu den Fassungen (8) angeordnet ist, wobei das Induktionsheizelement (8) aus einem metallischen Werkstoff mit Federeigenschaften hergestellt ist und unter zumindest bereichsweiser radialer Vorspannung in dem Thermoplastmaterial der Fassungen (6) einliegt,
ring- oder hülsenförmig ausgebildet ist und einen zu einem Zylinder verformten Werkstoffstreifen (15) aufweist, zwischen dessen zueinander weisenden Kanten ein axialer Längsspalt (16) ausgebildet ist.

2. Induktionsverbindungsmuffe (1) zum Schmelzverbinden schweißbarer Thermoplastkörper (3), mit mindestens zwei Fassungen (6) zur Aufnahme von Verbindungsabschnitten (2) der zu verbindenden Thermoplastkörper (3) und mit einem in die Fassungen (6) eingebetteten Induktionsheizelement (8), das in wesentlichen Abschnitten vollständig mit einem schweißbaren Thermoplastmaterial umgeben ist, wobei das Induktionsheizelement (8) koaxial zu den Fassungen (6) angeordnet ist, wobei das Induktionsheizelement (8) aus einem metallischen Werkstoff mit Federeigenschaften hergestellt ist und unter zumindest bereichsweiser radialer Vorspannung in dem Thermoplastmaterial der Fassungen (6) einliegt, ring- oder hülsenförmig ausgebildet ist und einen geschlossenen Zylinderabschnitt (17) un einen daran anschließenden axial geschlitzten Zylinderabschnitt (18) mit radial federnden Lamellen (14) aufweist.

3. Induktionsverbindungsmuffe nach Anspruch 1, **dadurch gekennzeichnet, dass** das Induktionsheizelement (8) eine Wandung des Verbindungsabschnittes (2) des Thermoplastkörpers (3) beidseitig übergreift.

4. Induktionsverbindungsmuffe nach einem der vorangegangenen Ansprüche, **dadurch gekennzeichnet, dass** in der Fassung (6) mindestens zwei Induktionsheizelemente (8) mit axialem Abstand zueinander angeordnet sind.

## Claims

1. An induction connecting sleeve (1) for connecting weldable thermoplastic elements (3) by means of fusion, with at least two sockets (6) for the insertion of connection sections (2) of the thermoplastic elements (3) to be connected, and with an induction heating element (8) embedded in the sockets (6), with operative sections of the induction heating element (8) surrounded completely by a weldable thermoplastic material, and with the induction heating element (8) arranged coaxially to the sockets (6), wherein said induction heating element (8) is made of a metallic material with spring characteristics and is placed under at least sectional radial pretension in the thermoplastic material of the sockets (6), and wherein the induction heating element (8) is ring-shaped or sleeve-shaped and comprises a strip of material (15) deformed to produce a cylinder, with an axial longitudinal gap (16) between its facing edges.

2. An induction connecting sleeve (1) for connecting weldable thermoplastic elements (3) by means of fusion, with at least two sockets (6) for the insertion of connection sections (2) of the thermoplastic elements (3) to be connected, and with an induction heating element (8) embedded in the sockets (6), with operative sections of the induction heating element (8) surrounded completely by a weldable thermoplastic material, and with the induction heating element (8) arranged coaxially to the sockets (6), wherein said induction heating element (8) is made of a metallic material with spring characteristics and is placed under at least sectional radial pretension in the thermoplastic material of the sockets (6), and wherein the induction heating element (8) is ring-shaped or sleeve-shaped and comprises a closed cylinder section (17) followed by an axially slotted cylinder section (18) with lamellae (14) with radial spring action.

3. The induction connecting sleeve according to Claim 1, wherein the induction heating element (8) overlaps a wall of the connection section (2) of the thermoplastic element (3) on both sides.

4. The induction connecting sleeve according to one of the preceding claims, wherein at least two induction heating elements (8) are arranged with axial spacing in the socket (6).

## Revendications

1. Manchon (1) de raccordement à induction, destiné à la liaison par fusion de corps thermoplastiques (3) pouvant être soudés, avec au moins deux douilles (6) pour recevoir des tronçons de liaison (2) des corps thermoplastiques (3) à relier, et avec un élément chauffant (8) à induction incorporé dans les douilles (6) qui, dans ses principales parties, est complètement entouré d'un matériau thermoplastique soudable, sachant que l'élément chauffant (8) à induction est disposé coaxialement aux douilles (6), sachant que l'élément chauffant (8) à induction est fabriqué en un matériau métallique ayant des propriétés de ressort et se trouve sous une précontrainte radiale au moins sectorielle dans le matériau thermoplastique des douilles (6), est réalisé en forme de bague ou de manchon et présente une bande de matériau (15) déformé en un cylindre, une fente longitudinale axiale (16) étant formée entre les bords de cette bande qui se font face.

2. Manchon (1) de raccordement à induction, destiné à la liaison par fusion de corps thermoplastiques (3) pouvant être soudés, avec au moins deux douilles (6) pour recevoir des tronçons de liaison (2) des corps thermoplastiques (3) à relier, et avec un élément chauffant (8) à induction incorporé dans les douilles (6) qui, dans ses principales parties, est complètement entouré d'un matériau thermoplastique soudable, sachant que l'élément chauffant (8) à induction est disposé coaxialement aux douilles (6), sachant que l'élément chauffant (8) à induction est fabriqué en un matériau métallique ayant des propriétés de ressort et se trouve sous une précontrainte radiale au moins sectorielle dans le matériau thermoplastique des douilles (6), est réalisé en forme de bague ou de manchon et présente une partie cylindrique fermée (17), qui est suivie d'une partie cylindrique (18) axialement fendue, dotée de lamelles radialement élastiques (14).

3. Manchon de raccordement à induction selon la revendication 1, **caractérisé en ce que** l'élément chauffant (8) à induction engage en recouvrement des deux côtés une paroi du tronçon de liaison (2) du corps thermoplastique (3).

4. Manchon de raccordement à induction selon l'une des revendications précédentes, **caractérisé en ce qu'**au moins deux éléments chauffants (8) à induction sont disposés à distance axiale l'un de l'autre dans la douille (6).
